# FASCICULE DE BREVET EUROPEEN

(11) **EP 0 738 769 B1**
(45) Date de publication et mention de la délivrance du brevet: **18.06.2003**
(21) Numéro de dépôt: 96420059.6
(22) Date de dépôt: 23.02.1996
(51) Int. Cl.: C09D 183/06, C09J 7/02

(54) **Compositions de polyorganosiloxanes réticulables**
Härtbare Polyorganosiloxan Zusammensetzungen
Crosslinkable polyorganosiloxane compositions

(30) Priorité: 24.02.1995 FR 9502392
(43) Date de publication de la demande: 23.10.1996
(73) Titulaire: RHODIA CHIMIE, 92408 Courbevoie Cédex (FR)
(72) Inventeur: Gaulle, Eric, F-69160 Tassin (FR); Soldat, André, F-69008 Lyon (FR); Priou, Christian, F-69100 Villeurbanne (FR)

(56) Documents cités:
- EP-A- 0 449 027
- EP-A- 0 464 706
- WO-A-93/20163
- GB-A- 2 119 809

## Description

La présente invention concerne essentiellement des compositions de polyorganosiloxane réticulables. Plus particulièrement, ces compositions de polyorganosiloxane selon la présente invention permettent de régler les forces de pelage, aussi bien dans le sens d'une augmentation que d'une diminution de ces forces de pelage, pour la fabrication de protecteurs de masses adhésives, encore dénommées "release liners", papiers ou plastiques et des étiquettes auto-adhésives sans "liner". Les compositions selon l'invention permettent aussi notamment d'obtenir un film réticulé continu à la surface de supports papiers ou de films qui conduisent, en fonction de la vitesse de pelage des substances collantes, par exemple PSA, bitume, hot-melt, à une force de pelage indépendante de la vitesse de pelage ou augmentant avec la vitesse de pelage.

Les compositions selon l'invention peuvent avantageusement être réticulables sous radiation, en particulier sous radiation UV, avantageusement à l'aide de photoamorceur de réticulation sous radiation UV de type cationique.

Dans la technique antérieure, il est connu, par le document FR-A-2 291 253 ICI, des compositions d'organopolysiloxane propres à conférer des propriétés anti-adhésives à des substrats comprenant de 100 parties en poids d'un polydiorganosiloxane sous la forme d'une composition antiadhésive réticulable et 0,1 à 50 parties en poids d'un copolymère de formule générale moyenne

A₃SiO(Me₂SiO)ₓ(MeRSiO)_{y}(MeHSiO)_{z}SiA₃

avec R représentant divers radicaux de type alkyle, aralkyle pouvant contenir un atome d'oxygène ou de soufre et A représentant un radical pouvant être identique à R, un radical alkényle, alkoxy, hydroxyle ou encore un atome d'hydrogène, et x, y et z pouvant avoir diverses significations, la somme de x de y et de z n'étant pas inférieure à 20 ni supérieure à 1.000, le rapport de y à la somme de x, de y et de z n'étant pas inférieur à 0,05, tandis que le rapport total R:Si de la composition n'est pas inférieur à 1:2.000.

La composition antiadhésive réticulable peut comprendre un diorganopolysiloxane linéaire contenant des radicaux hydroxyles unis à du silicium, un agent de réticulation choisi parmi les polysiloxanes contenant l'hydrogène uni à du silicium , les polysilicates d'alkyle, les trialkoxyorganosiloxanes et leurs produits d'hydrolyse partielle et les organotriacyloxysilanes, ou un catalyseur (voir les revendications 1 et 2).

La composition antiadhésive réticulable peut aussi comprendre un diorganopolysiloxane linéaire contenant des radicaux vinyle unis à du silicium, un polysiloxane contenant l'hydrogène unis à du silicium et un composé du platine (voir revendication 3).

Il est également connu, par le document FR-A-2 299 379 ICI, une composition du même type selon laquelle le copolymère répond à la formule générale moyenne modifiée suivante : 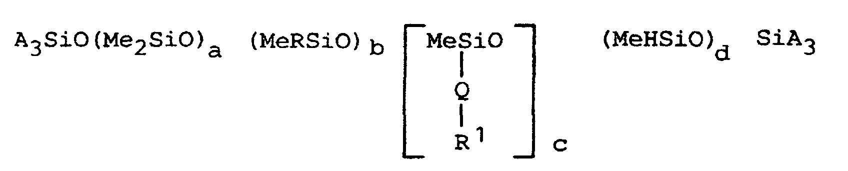 où les significations sont du même type que celles décrites dans le document précédent ICI. Les radicaux R et R¹ peuvent compter chacun un maximum de 30 atomes de carbone. Dans ce document, il est également prévu un catalyseur peroxydique (revendication 5).

Dans aucun de ces documents, il n'est décrit la possibilité que l'organopolysiloxane puisse contenir des fonctions époxy.

Par contre, le document FR-A-2 526 800, Général Electric, décrit des organopolysiloxanes dans lesquels le silicium peut être substitué par un radical organique époxy-fonctionnel ayant de 2 à 20 atomes de carbone ou un radical organique acrylique-fonctionnel ayant de 2 à 20 atomes de carbone, l'un au moins des motifs polymère étant époxy- ou acrylique-fonctionnel (voir en particulier les revendications et les exemples).

Il est précisé dans la description (pages 17 à 19) que l'on peut faire durcir les silicones époxy- et acrylique-fonctionnel pour obtenir des revêtements adhésifs en les exposant à un rayonnement ultraviolet en présence de quantités catalytiques des catalyseurs formés par les sels d'onium ou les initiateurs de radicaux libres ou de préférence des photoinitiateurs ce qui permet d'accélérer la vitesse de durcissement ainsi que d'améliorer les caractéristiques adhésives en présence simultanée de photoinitiateurs de type sel d'onium cationiques et de photoinitiateurs à radicaux libres.

Il est encore précisé que les caractéristiques de durcissement et d'adhérence des compositions comportant des groupes époxy peuvent être améliorées par addition de monomères époxy à la composition (page 18, ligne 25 à page 19, ligne 21).

Cependant, les caractéristiques et propriétés des compositions à base de organopolysiloxanes peuvent encore être améliorées.

La présente invention a pour but de résoudre un nouveau problème technique consistant à la fourniture de nouvelles compositions à base d'organopolysiloxane époxy-fonctionnel permettant de régler les forces de pelage à volonté, que ce soit pour réaliser une augmentation ou une diminution de ces forces de pelage, ce qui est particulièrement utile pour fournir une grande versatilité dans le cadre de la fabrication industrielle d'éléments protécteurs de masses adhésives ("release liners"), papiers ou plastiques et des étiquettes autoadhésives en particulier sans "liner".

La présente invention a encore pour but de résoudre le nouveau problème technique consistant à la fourniture de nouvelles compositions à base d'organopolysiloxane époxy-fonctionnel présentant une force de pelage indépendante de la vitesse de pelage ou augmentant avec la vitesse de pelage.

Un autre but de la présente invention est de résoudre ces problèmes techniques d'une manière particulièrement simple, peu coûteuse, utilisable à l'échelle industrielle et commerciale.

La présente invention permet d'atteindre simultanément ces buts en étant ainsi utilisable à l'échelle industrielle et commerciale.

Ainsi, selon un premier aspect, la présente invention fournit des compositions à base d'organopolysiloxanes époxy-fonctionnels réticulables comprenant :
**A)** au moins 10% en poids d'un polyorganosiloxane linéaire (POS) **A** de formule générale moyenne : 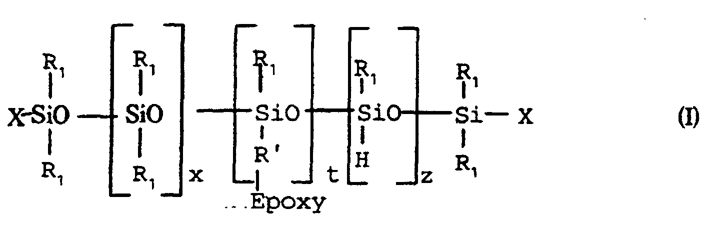 dans laquelle :
   - le substituant R₁ peut être identique ou différent et représenter un radical alkyle linéaire ou ramifié en C₁ - C₄, éventuellement substitué par un ou plusieurs atomes d'halogène, en particulier fluor ; par exemple méthyle, éthyle, propyle, isopropyle, monofluoro, difluoro ou trifluro-3,3,3 propyle, ou un radical aryle, en particulier un radical phényle éventuellement substitué par un ou plusieurs atomes d'halogène, en particulier fluor,
   - la chaîne R' portant le groupement époxy-fonctionnel peut être identique ou différente et comprend de 2 à 50, de préférence de 2 à 20 atomes de carbone, ce groupement époxy-fonctionnel étant soit présent en terminaison de la chaîne hydrocarbonée, du type : 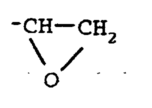 soit, dans une position intermédiaire, du type : 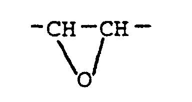 cette position intermédiaire du groupement époxy-fonctionnel pouvant être présente sur une partie cyclique de la chaîne, en particulier un cycle ayant de 5 à 7 membres, de préférence un cycle à 6 membres ; la chaîne R' étant, par exemple, choisie parmi : 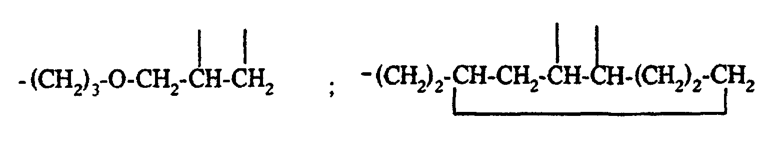 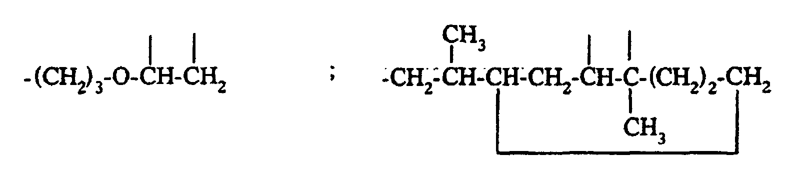
      X: est un radical monovalent choisi parmi R₁, H, -R'-époxy, hydroxyle ;
      x : est un nombre entier ou fractionnaire variant de 40 à 150 ;
      t : est un nombre entier ou fractionnaire variant de 3 à 9 ;
      z : est un nombre entier ou fractionnaire variant de 0 à 5 ;
**B)** au moins un deuxième polymère **B** de polyorganosiloxane linéaire époxy-fonctionnel réticulable présent dans une proportion pouvant atteindre 90% en poids du mélange **A** + **B,** choisi parmi le groupe consistant de :
   → **a)** un polyorganosiloxane linéaire époxy-fonctionnel **B(a)** réticulable de formule générale **(I)** précitée avec les mêmes définitions à l'exception du fait que :
      x est un nombre entier ou fractionnaire variant de 160 à 1000 ;
      t est un nombre entier ou fractionnaire variant de 1 à 15 , et
      z est un nombre entier ou fractionnaire variant de 0 à 5 ;
   → **b)** un polyorganosiloxane linéaire époxy-fonctionnel **B(b)** réticulable de la formule (**I**) précitée , ayant les mêmes définitions, à l'exception du fait que :
      x est un nombre entier ou fractionnaire variant de 0 à 120 ;
      t est un nombre entier ou fractionnaire variant de 10 à 30 ;
      z est un nombre entier ou fractionnaire variant de 0 à 5 ;
   → **c)** un polyorganosiloxane **B(c)** de formule générale (**II**) suivante : 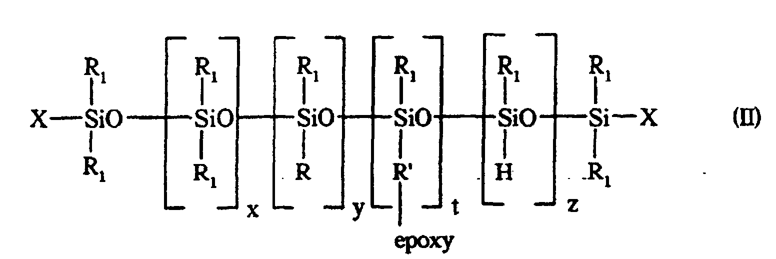 dans laquelle :
      - R₁, R' et X présentent les mêmes définitions que les polyorganosiloxanes **A** de formule **(I)** précités,
      - la chaîne R est choisie parmi les chaînes alkyl linéaires ou ramifiées contenant de 9 à 26 atomes de carbone,
      - x est un nombre entier ou fractionnaire variant de 0 à 200,
      - y est un nombre entier ou fractionnaire variant de 10 à 90,
      - t est un nombre entier ou fractionnaire variant de 0 à 5, et
      - z est un nombre entier ou fractionnaire variant de 0 à 5 ;
   → **d)** et leurs mélanges ;
**C)** et au moins un composé amorceur de durcissement sous radiation, de préférence un composé amorceur cationique, en particulier activé sous radiation et, notamment, par activation photochimique, en particulier UV.

Conformément à l'invention :
Δ les polyorganosiloxanes A de formule générale **(I)** précités préférés sont ceux pour lesquels :
   - R₁ = X =CH₃ ;
   - -R'-époxy est choisi parmi : 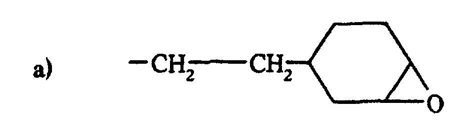 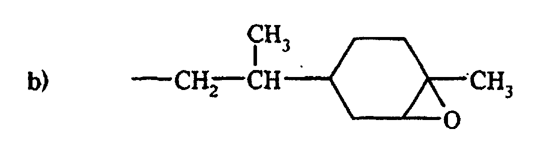 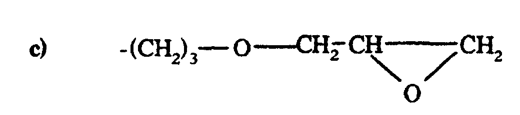 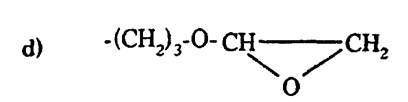
   - x : est un nombre entier ou fractionnaire variant de 60 à 100,
   - t : est un nombre entier ou fractionnaire variant de 6 à 9 , et
   - z : est un nombre entier ou fractionnaire variant de 0 à 2 ;
Δ les polyorganosiloxanes **B(a)** définis ci-dessus préférés sont ceux pour lesquels :
   - x : est un nombre entier ou fractionnaire variant de 200 à 600,
   - t : est un nombre entier ou fractionnaire variant de 1 à 5, et
   - z : est un nombre entier ou fractionnaire variant de 0 à 2 ;

Δ les polyorganosiloxanes **B(b)** définis ci-dessus préférés sont ceux pour lesquels :
   - x : est un nombre entier ou fractionnaire variant de 20 à 55,
   - t : est un nombre entier ou fractionnaire variant de 10 à 16, et
   - z : est un nombre entier ou fractionnaire variant de 0 à 2 ;

Δ et les polyorganosiloxanes **B(c)** définis ci-dessus préférés sont ceux pour lesquels :
   - R est un radical alkyle, linéaire ou ramifié, ayant de 10 à 20 atomes de carbone,
   - x : est un nombre entier ou fractionnaire variant de 100 à 150,
   - y : est un nombre entier ou fractionnaire variant de 15 à 75,
   - t : est un nombre entier ou fractionnaire variant de 0 à 2, et
   - z : est un nombre entier ou fractionnaire variant de 0 à 2.

La proportion minimale en deuxième polymère POS, e. g. du type polydiméthylsiloxane **B** précité, peut varier dans de grandes limites mais, de préférence, la proportion minimale sera de 0,5% en poids du mélange **A** + **B,** encore mieux d'au moins 1% en poids du mélange **A** + **B.** Des proportions actuellement commercialement intéressantes varient généralement entre 1% et 50% en poids du deuxième polymère **B** relativement au mélange **A** + **B.**

Les polyorganosiloxanes **A**, **B(a)** et **B(b)** de l'invention à fonction époxy peuvent être obtenus, par exemple, par réaction d'addition (hydrosilylation), à partir:
(i) d'organohydrogénopolysiloxanes (H) correspondants exempts des fonctions époxy, et
(ii) de composés organiques éthyléniquement insaturé (Ψ) dont dérivent les fonctions époxy.

Les polyorganosiloxanes mixtes **B(c)** de l'invention, à fonctions époxy et R, peuvent être obtenus, par exemple, par réactions d'addition (hydrosilylation) simultanées ou successives , à partir :
(i) d'organohydrogénopolysiloxanes (H) correspondant exempts des fonctions R et époxy, et
(ii) de composés organiques éthyléniquement insaturés (Ψ) dont dérivent les fonctions époxy, et
(iii) de composés éthyléniquement insaturés (Δ) en bout de chaîne dont dérivent les fonctions R.

Ces réactions d'hydrosilylation peuvent être réalisées à une température de l'ordre de 20 à 200°C, de préférence de l'ordre de 60 à 120°C, en présence d'un catalyseur à base d'un métal du groupe du platine ; on peut citer en particulier les dérivés et complexes du platine décrits dans US-A-3 715 334, US-A-3 814 730, US-A-3 159 601, US-A-3 159 662.

Les quantités de catalyseur mises en oeuvre sont de l'ordre de 1 à 300 parties par million, exprimées en métal par rapport au milieu réactionnel.

Dans la définition de la "mole de Ψ", on considérera comme entité élémentaire l'insaturation oléfinique susceptible de réagir avec (H) par hydrosilylation. De même, dans la définition de la "mole de (Δ)" on considérera comme entité élémentaire l'insaturation oléfinique susceptible de réagir avec (H) par hydrosilylation.

Les quantités de réactifs, pouvant être mises en oeuvre, correspondent généralement à un rapport molaire [(Ψ) + éventuellement (Δ)] / SiH [de (H)] qui est de l'ordre de 1 à 5, de préférence de l'ordre de 1 à 2.

Il a été découvert, de manière inattendue, que la combinaison du polymère de base **A** et du deuxième polymère **B(a)** permet de diminuer les forces de pelage, tandis que le profil des forces de pelage augmente parallèlement avec la vitesse de pelage.

Selon un mode de réalisation avantageuse de l'invention, relativement au mélange **A + B,** le deuxième polymère **B(a)** est, avantageusement, présent en une proportion de 1% à 15% en poids.

D'autre part, il a pu être observé, de manière également inattendue, que le deuxième polymère **B(b)** permet d'augmenter les forces de pelage, ainsi que le fait que le profil des forces de pelage diminue parallèlement avec la vitesse de pelage. La proportion est, de préférence, comprise entre 1 et 40 % en poids relativement au mélange **A** + **B.**

Dans ces circonstances, il est préféré selon l'invention que le polymère **B(a),** diminuant les forces de pelage, ne soit pas mélangé simultanément avec le polymère **B(b)** qui augmente les forces de pelage, sauf dans les cas particuliers où il est souhaité de jouer sur une combinaison fine de ces polymères **B(a)** et **B(b)** pour régler finement la force de pelage, ainsi que le profil des forces de pelage.

D'autre part, il a encore été observé, de manière inattendue, que le deuxième polymère **B(c)** n'aboutit pas à une augmentation ou une diminution significative des forces de pelage mais, par contre, les forces de pelage deviennent indépendantes de la vitesse de pelage. La proportion est, de préférence, comprise entre 1 et 20 % en poids relativement au mélange **A** + **B.**

Ainsi, selon un mode de réalisation préféré, il est avantageux, non seulement de combiner le deuxième polymère **B(c)** avec le polymère de base **A,** mais encore de le combiner, en tant que troisième composant, avec le deuxième polymère **B(a)** ou **B(b),** afin de rendre les forces de pelage indépendantes de la vitesse de pelage, que la force de pelage soit maintenue, diminuée (avec le deuxième polymère **B(a)** ), ou augmentée (avec le deuxième polymère **B(b)).**

On comprend ainsi que l'invention procure une grande versatilité et de grandes possibilités d'adaptation à des cas considérables d'applications pratiques industriellement.

L'invention est donc d'une grande valeur commerciale.

Comme indiqué supra, la composition comprend, conformément à l'invention, au moins un composé amorceur de durcissement sous radiation, de préférence un composé amorceur cationique, en particulier activé sous radiation et, notamment, par activation photochimique, en particulier UV.

Des agents amorceur préférés sont les sels d'onium ou des complexes organo-métalliques, par exemple décrits dans les brevets US-A-4 069 054, US-A-4 450 360, US-A-4 176 999, US-A-4 640 967, US-A-1 274 646, EP-A-0 203 829.

Des sels d'onium particulièrement préférés sont ceux qui sont décrits dans des demandes précédentes du déposant, EP-A-0 562 897 et EP-A-0 562 922. L'ensemble de ces documents est incorporé ici par référence.

Dans le cadre de la présente invention, les agents amorceurs particulièrement préférés sont les sels d'arylborateiodonium, les sels d'arylborateferrocenium, les sels de tétrafluoroantimonate(phosphate) iodonium, et les sels de tétrafluoroantimonate(phosphate)ferrocenium.

Des proportions intéressantes de composé amorceur de durcissement sous radiation varient généralement entre 0,01 % et 20 % en poids, de préférence entre 0,1 % et 8 % en poids relativement au mélange **A** + **B.**

D'autres composants, qui pourraient être ajoutés dans les compositions de polydimethylsiloxane réticulable selon la présente invention, sont également bien connus à l'homme de l'art et résultent également de l'état de la technique antérieure, telle que décrite dans la partie introductive de la présente description.

D'autres buts, caractéristiques et avantages de l'invention apparaitront clairement à la lumière d'exemples explicatifs donnés ci-après simplément à titre d'illustration qui ne sauraient donc, en aucune façon, limiter la portée de l'invention. Dans les exemples, tous les pourcentages sont donnés en poids, sauf indication contraire ; à noter que les pourcentages en poids qui y sont indiqués :
- pour chacun des polyorganosiloxanes **A, B(a), B(b)** et **B(c),** et
- pour le photoamorceur de réticulation, sont toujours exprimés relativement au mélange **A** + **B**.

### EXEMPLES

### EXEMPLE 1

On utilise un polyorganosiloxane linéaire **A** de formule **(I)** dans laquelle R₁ est méthyle, soit un polydiméthylsiloxane, en abrégé PDMS, avec :
-R'-Epoxy correspondant à 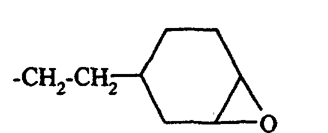 avec x = 73 ; t = 7 ; z = 0.
Dans un tel polymère de base PDMS linéaire A, des quantités variables de :
- polymère **B** linéaire **B(a),** formé par un polymère de structure de base PDMS, identique à celle du polymère PDMS linéaire **A** décrit ci-dessus, mais avec x = 218 ; t = 2 ; z = 0 (polymère N°1),
- polymère **B** linéaire **B(a)** de formule identique à celle du polymère de base PDMS linéaire **A** ci-dessus, mais avec x = 500 ; t = 15 ; z = 2 (polymère N° 2),
ont été introduites avec 2,5 % en poids d'un photoamorceur de réticulation sous radiation UV du type arylborateiodonium, constitué ici par le tetrakis (pentafluorophenyl)borate de bis-(toluyl)iodonium.
Le mélange a été enduit sur un support papier très raffiné GLASSINE de 62 g/m² et Polyester TERPHANE 60284®, commercialisé par Rhône-Poulenc, France, 36 µm, réticulé à l'aide d'une lampe UV de puissance de 120 W/cm à 150 m/mn. Les forces de pelage à 180° et à 0,3 m/mn vis-à-vis de rubans adhésifs de test type TESA® 4154, 4651 et 4970 (à chaud), commercialisés par Beiersdorf, Allemagne, ont été mesurées avec dynamomètre après 20 heures de contact sous pression.

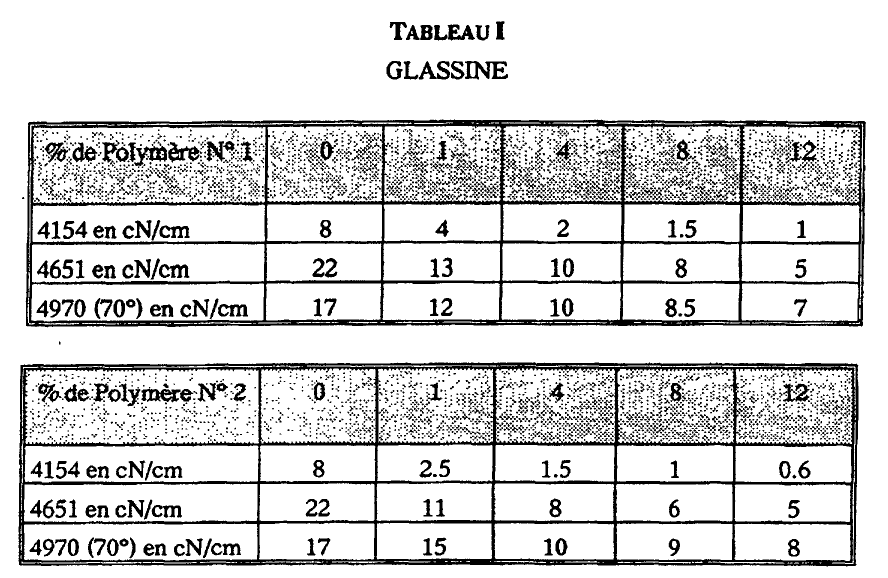

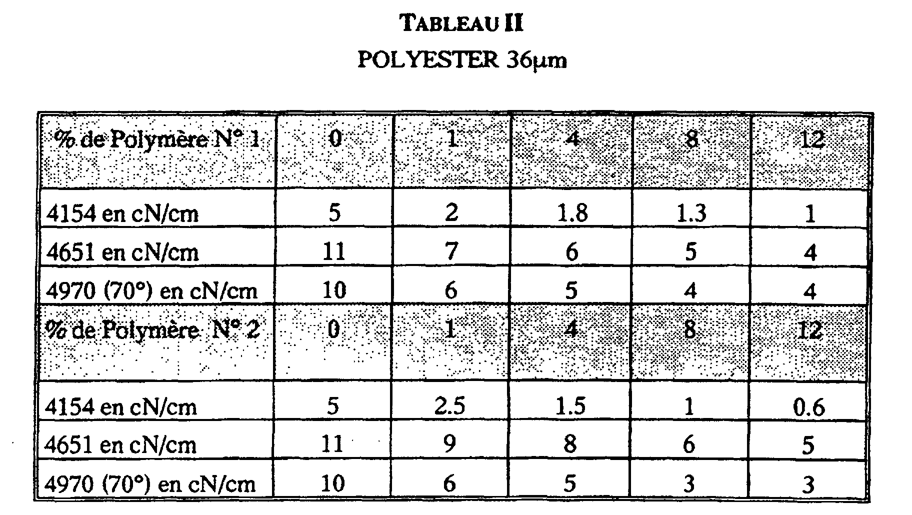

Il résulte des tableaux I et II que l'augmentation du taux de substitution des polymères 1 et 2 permet de diminuer les forces de pelage à basse vitesse de pelage.

### EXEMPLE 2

On utilise un polymère de base PDMS linéaire **A**, identique à celui utilisé à l'exemple 1, on introduit des quantités variables en poids de polymère N°1 et de polymère N°2, également utilisés à l'exemple 1, avec 2,5 % en poids d'un photoamorceur de réticulation sous radiation UV du type arylborateiodonium, constitué ici par le tetrakis (pentafluorophenyl)borate de bis-(toluyl)iodonium.
Le mélange a été enduit sur un support GLASSINE de 62 g/m² et réticulé à l'aide d'une lampe UV de puissance de 120 W/cm à 150 m/mn. Les forces de pelage à 180° et à différentes vitesses de pelage vis-à-vis de rubans adhésifs de test type TESA® 4651, 4970 (à chaud), commercialisés par Beiersdorf, Allemagne, et d'un adhésif acrylique émulsion tackifié, disponible dans le commerce sous la dénomination commerciale ACRONAL V205® chez BASF, Allemagne, ont été mesurées avec dynamomètre après 20 heures de contact sous pression.

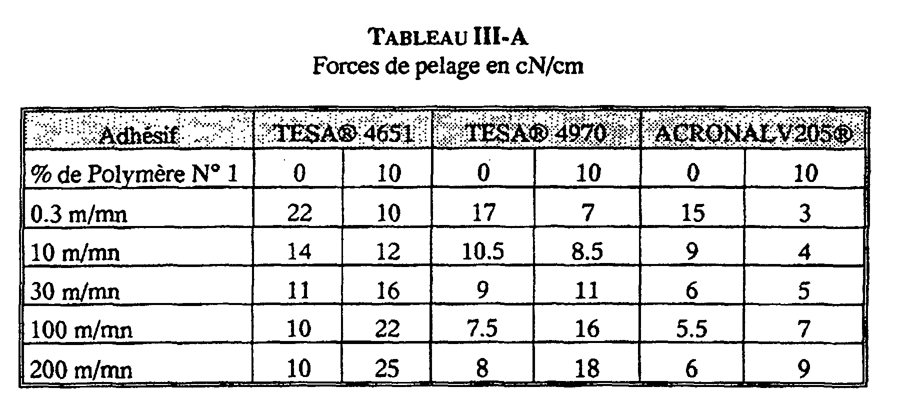

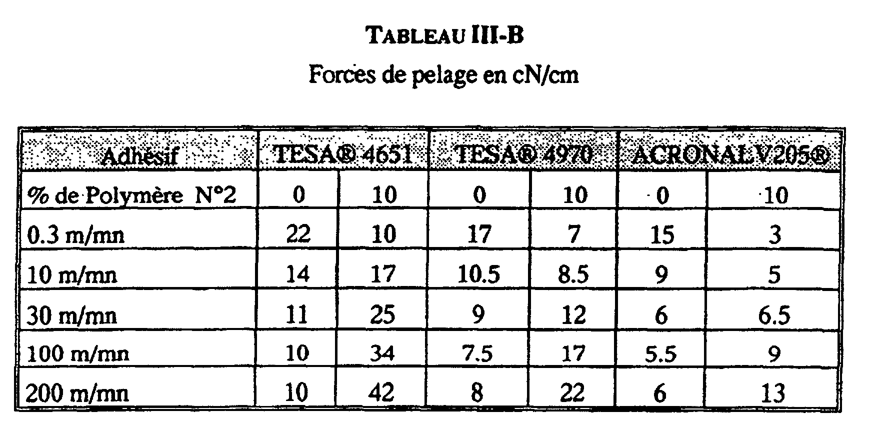

Il résulte des tableaux III-A et B que l'incorporation d'un polymère **B** de formule **B(b)** permet de modifier le profil des forces de pelage en fonction de la vitesse de pelage. Les forces augmentent avec la vitesse de pelage.

### EXEMPLE 3

Dans le polymère de base PDMS linéaire **A** de l'exemple 1 avec x = 73 ; t = 7 ; z = 0, des quantités variables de :
- polymère **B** PDMS **B(b)** de formule chimique identique à celle du polymère **A** mais avec x = 45 ; t = 11 ; z = 1 (polymère 3),
- polymère **B** PDMS **B(b)** de formule identique au polymère **A** mais avec x = 110 ; t = 16 ; z = 0 (polymère 4),
ont été introduites avec 2,5 % en poids d'un photoamorceur de réticulation sous radiation UV du type arylborateiodonium, constitués ici par le tetrakis(pentafluorophenyl)borate de bis(toluyl)iodonium.
Le mélange a été enduit sur un support GLASSINE de 62 g/m² et Polyester TERPHANE 6028®, 36 µm, réticulé à l'aide d'une lampe UV de puissance de 120 W/cm à 150 m/mn. Les forces de pelage à 180° et à 0,3 m/mn vis-à-vis de rubans adhésifs de test type TESA® 4154, 4651 et 4970 (à chaud), commercialisé par Beiersdorf, Allemagne, ont été mesurées avec dynamomètre après 20 heures de contact sous pression.

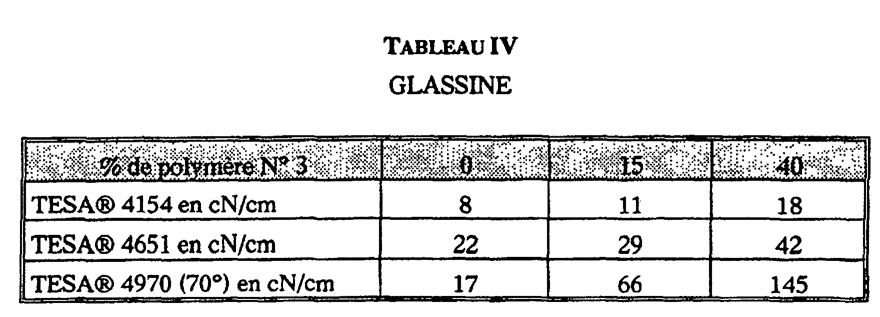

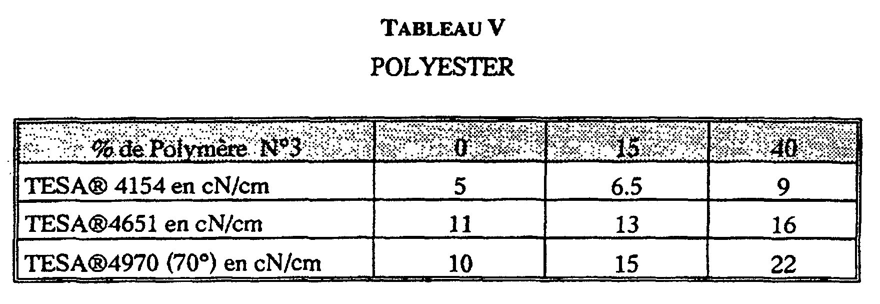

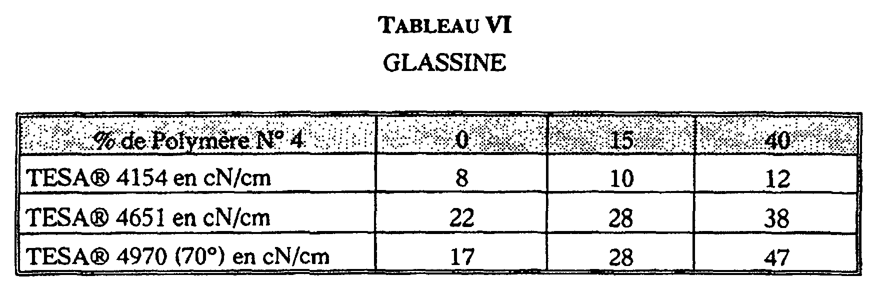

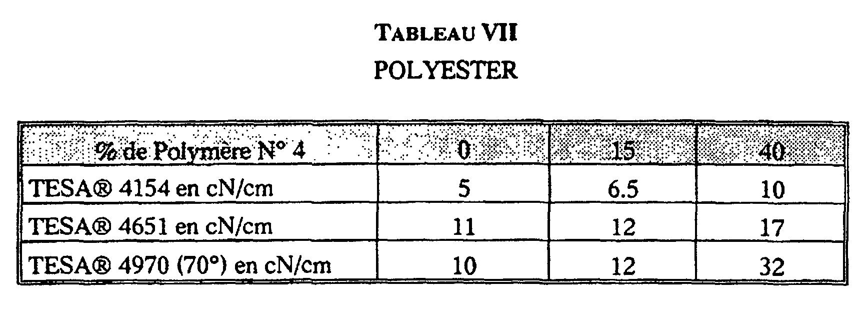

### EXEMPLE 4

Dans le polymère de base PDMS linéaire **A** de l'exemple 1 avec x = 73 ; t = 7 ; z = 0, des quantités variables en poids de :
- polymère **B** PDMS **B(b)** de formule identique au polymère de base **A** de l'exemple 1, mais avec x = 45 ; t = 11 ; z = 1 (polymère 3),
- polymère **B** PDMS **B(b)** de formule identique au polymère de base **A** de l'exemple 1, mais avec x = 110 ; t = 16 ; z = 0 (polymère 4),
ont été introduites avec 2,5 % en poids d'un photoamorceur de réticulation sous radiation UV du type arylborateiodonium, constitué ici par le tetrakis(pentafluorophenyl)borate de bis-(toluyl)iodonium.
Le mélange a été enduit sur un support GLASSINE de 62g/m² et réticulé à l'aide d'une lampe UV de puissance de 120 W/cm à 150 m/mn. Les forces de pelage à 180° et à différentes vitesses de pelage vis-à-vis de rubans adhésifs de test type 4651, 4970 (à chaud) et 4154 ont été mésurées avec dynamomètre après 20 heures de contact sous pression.

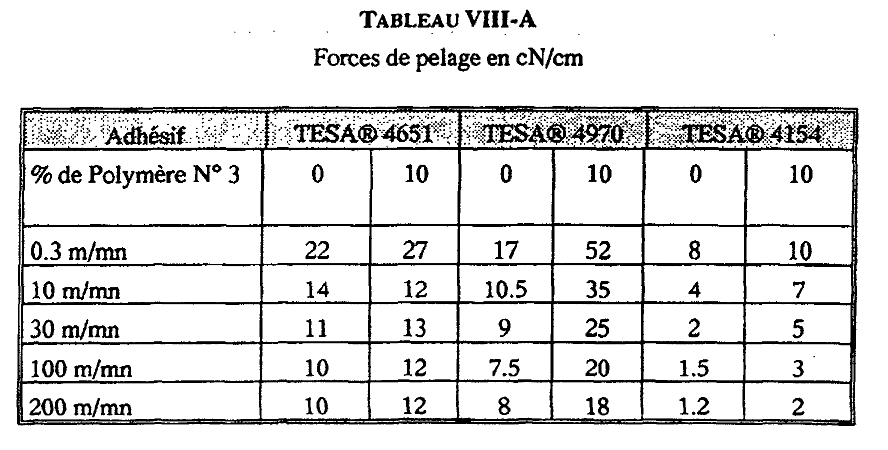

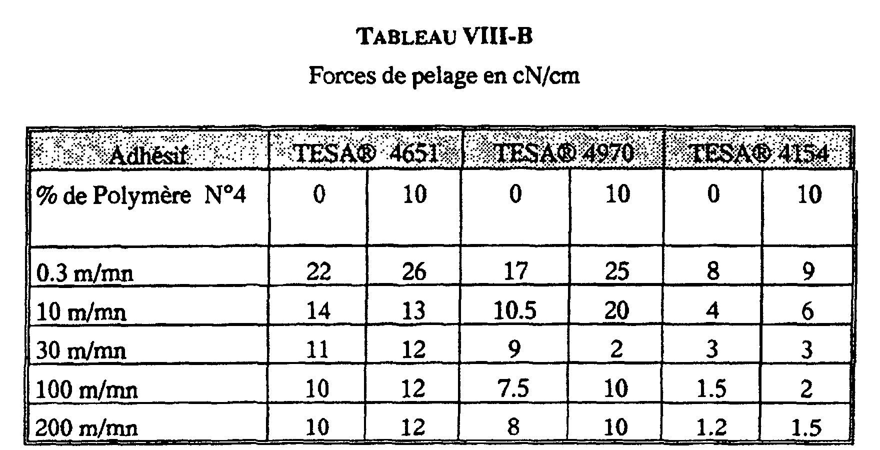

Il résulte des tableaux VIII-A et B que l'incorporation des polymères **B(b)** permet d'augmenter les forces de pelage sans modifier le profil des forces de pelage en fonction de la vitesse de pelage par rapport aux polymères **A**. Les forces diminuent avec la vitesse de pelage.

### EXEMPLE 5

Dans le polymère de base PDMS linéaire **A** de l'exemple 1 avec x = 73 ; t = 7 ; z = 0, des quantités variables en poids de :
- polymère **B** PDMS linéaire **B(c),** de formule II précitée avec :
   -R'-Epoxy correspondant à 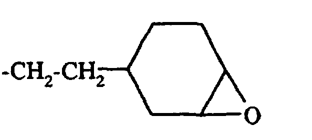
   R = tétradécyle et
   R₁ = X = CH₃ , et avec x = 145 ; y = 50 ; t = 0 ; z = 0 (polymère N° 5),
- polymère **B** PDMS linéaire **B(c)** de formule II ayant la même signification que le polymère N° 5 défini ci-dessus mais avec x = 148 ; y = 50 ; t = 2 ; z = 1 (polymère N° 6),
ont été introduites avec 2.5% en poids d'un photoamorceur de réticulation sous radiation UV du type arylborateiodonium tetrakis(pentafluorophenyl) borate de bis(toluyl)iodonium.
Le mélange a été enduit sur un support GLASSINE de 62 g/m² et réticulé à l'aide d'une lampe UV de puissance de 120 W/cm à 150 m/mn. Les forces de pelage à 180° et à différentes vitesses de pelage vis à vis de rubans adhésifs de test TESA® 4651, 4970 (à chaud) et 4154, commercialisé par Beiersdorf, Allemagne, ont été mésurées avec dynamomètre après 20 heures de contact sous pression.

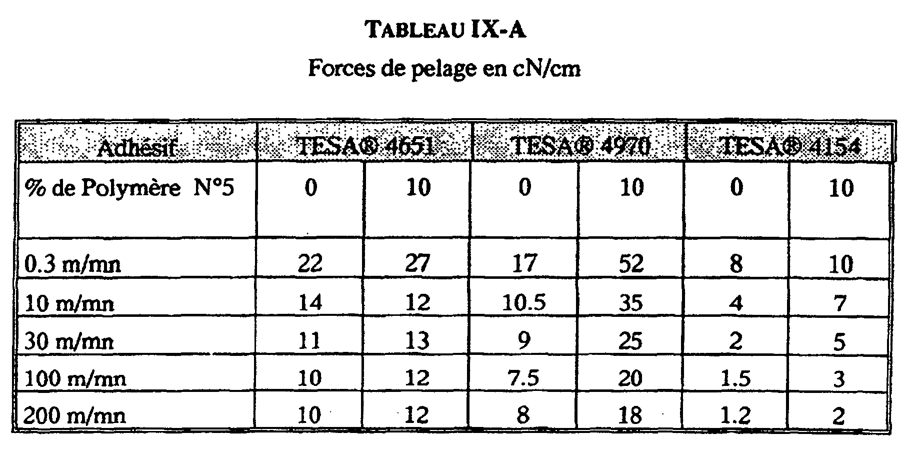

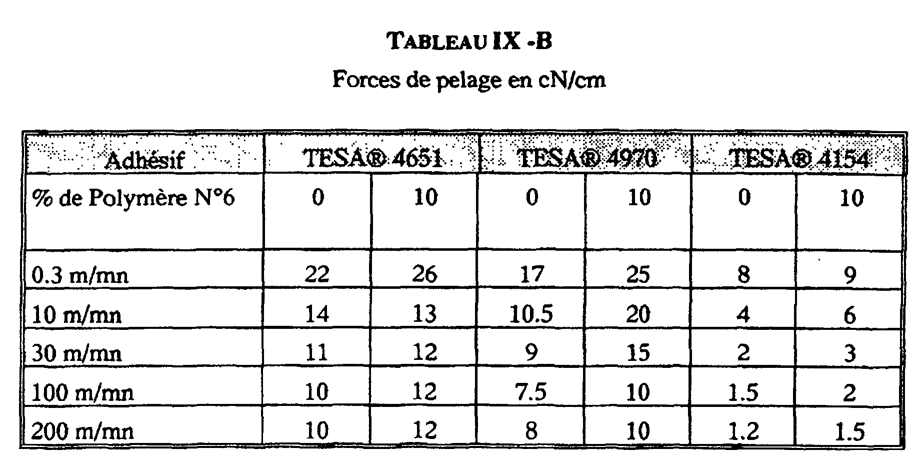

Il résulte des tableaux IX-A et B que l'incorporation des polymères **B(c)** n'a pas d'influence significative sur le niveau des forces de pelage. En fonction de la vitesse de pelage par rapport aux polymères **A,** les forces deviennent indépendantes de la vitesse de pelage.

### EXEMPLE 6

### 6.1 Mélange A + B(a) + B(c) :

Dans le polymère de base PDMS linéaire **A** de l'exemple 1 avec x = 73 ; t = 7 ; z= 0, les quantités suivantes sont chargées pour préparer le mélange **A** + **B(a)** + **B(c) :**
- 10% en poids, relativement au mélange, de polymère **B** PDMS linéaire **B(a)** défini à l'exemple 1 avec x = 218 ; t = 2 ; z = 0 (polymère N°1),
- 10% en poids, relativement au mélange, de polymère **B** PDMS linéaire **B(c)** défini à l'exemple 5 avec x = 145 ; y = 50 ; t = 0 ; z = 0 (polymère N° 5) ;

### 6.2 Mélange A + B(b) + B(c) :

Dans le polymère de base PDMS linéaire **A** de l'exemple 1, avec x = 73 ; t = 7 ; z = 0, les quantités suivantes sont chargées :
- 40% en poids, relativement au mélange, de polymère **B** PDMS linéaire **B(b)** défini à l'exemple 3, avec x = 45 ; t = 11 ; z = 1 (polymère N° 3) ; et
- 1% en poids, relativement au mélange, de polymère **B** PDMS linéaire **B(c)** défini à l'exemple 5 avec x = 145 ; y = 50 ; t = 0 ; z = 0 (polymère N° 5) ;
chaque mélange étant additionné avec 2.5% en poids d'un photoamorceur de réticulation sous radiation UV du type arylborateiodonium, constitué ici par le tetrakis(pentafluorophenyl)borate de bis(toluyl)iodonium.
Chaque mélange a été enduit sur un support GLASSINE de 62 g/m² et réticulé à l'aide d'une lampe UV de puissance de 120 W/cm à 150 m/mn. Les forces de pelage à 180° et à différentes vitesses de pelage vis à vis de rubans adhésifs de test type TESA® 4651, 4970 (à chaud) et 4154, commercialisé par Beiersdorf, Allemagne, ont été mesurées avec dynamomètre après 20 heures de contact sous pression.

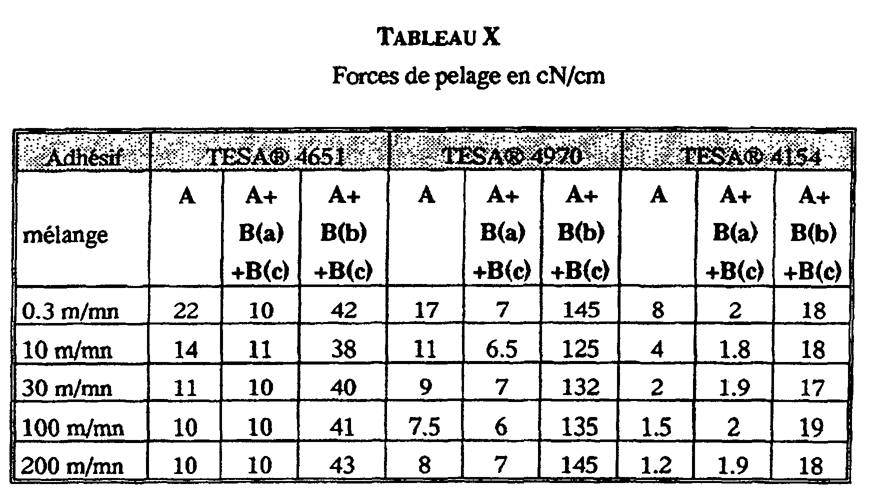

Il résulte du tableau X que l'incorporation des polymères **B(c)** n'a pas d'influence significative sur le niveau des forces de pelage dans les mélanges de polymères **A + B(a) et A + B(b).** Les niveaux des forces de pelage augmentent et diminuent conformément à l'action des polymères **B(a)** et **B(b).** En fonction de la vitesse de pelage par rapport aux polymères **A,** les forces deviennent indépendantes de la vitesse de pelage.

## Revendications

1. Composition à base d'organopolysiloxane époxy-fonctionnel réticulabe comprenant :
**A)** au moins 10% en poids d'un polyorganosiloxane linéaire (POS) **A** de formule générale moyenne : 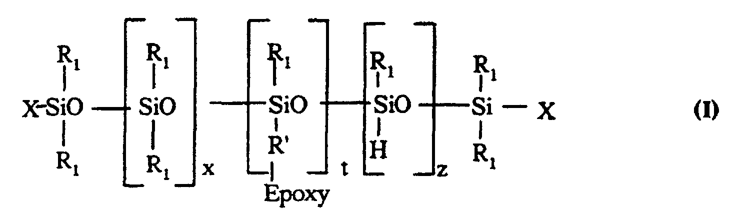 dans laquelle :
• le substituant R₁ peut être identique ou différent et représenter un radical alkyle linéaire ou ramifié en C₁-C₄, éventuellement substitué par un ou plusieurs atomes d'halogène, ou un radical aryle, éventuellement substitué par un ou plusieurs atomes d'halogène,
• la chaîne R' portant le groupement époxy-fonctionnel peut être identique ou différente et comprend de 2 à 50, de préférence de 2 à 20 atomes de carbone, ce groupement époxy-fonctionnel étant, soit présent en terminaison de la chaîne hydrocarbonée, du type : 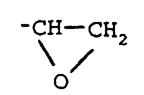 soit, dans une position intermédiaire, du type : 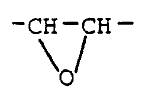 cette position intermédiaire du groupement époxy-fonctionnel pouvant être présente sur une partie cyclique de la chaîne, en particulier un cycle ayant de 5 à 7 membres,
• X: est un radical monovalent choisi parmi R₁, H, -R'-époxy, hydroxyle ;
• x : est un nombre entier ou fractionnaire variant de 40 à 150,
• t : est un nombre entier ou fractionnaire variant de 3 à 9,
• z : est un nombre entier ou fractionnaire variant de 0 à 5 ;
**B)** au moins un deuxième polymère **B** de polyorganosiloxane linéaire époxy-fonctionnel réticulable présent dans une proportion pouvant atteindre 90% en poids du mélange **A** + **B,** choisi parmi le groupe consistant de :
**a)** un polyorganosiloxane linéaire époxy-fonctionnel **B(a)** réticulable de formule générale (**I**) précitée avec les mêmes définitions à l'exception du fait que :
- x est un nombre entier ou fractionnaire variant de 160 à 1000,
- t est un nombre entier ou fractionnaire variant de 1 à 15, et
- z est un nombre entier ou fractionnaire variant de 0 à 5 ;
**b)** un polyorganosiloxane linéaire époxy-fonctionnel **B(b)** réticulable de la formule (**I**) précitée, ayant les mêmes définitions, à l'exception du fait que :
- x est un nombre entier ou fractionnaire variant de 0 à 120,
- t est un nombre entier ou fractionnaire variant de 10 à 30,
- z est un nombre entier ou fractionnaire variant de 0 à 5 ;
**c)** un polyorganosiloxane **B(c)** de formule générale (**II**) suivante 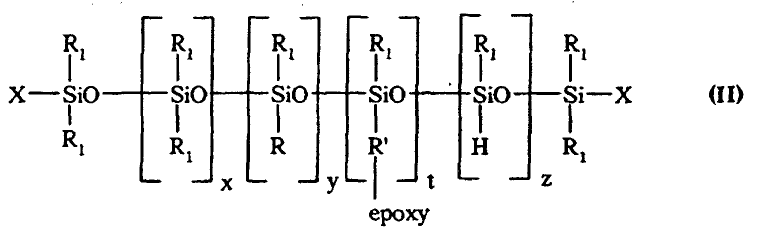 dans laquelle :
• R₁, R' et X présentent les mêmes définitions que les polyorganosiloxanes **A** de formule (**I**) précités,
• la chaîne R est choisie parmi les chaînes alkyl linéaires ou ramifiées contenant de 9 à 26 atomes de carbone :
- x est un nombre entier ou fractionnaire variant de 0 à 200,
- y est un nombre entier ou fractionnaire variant de 10 à 90,
- t est un nombre entier ou fractionnaire variant de 0 à 5, et
- z est un nombre entier ou fractionnaire variant de 0 à 5 ;
**d)** et leurs mélanges ;
**C)** et au moins un composé amorceur de durcissement sous radiation, de préférence un composé amorceur cationique, en particulier activé sous radiation et, notamment, par activation photochimique, en particulier UV.

2. Composition selon la revendication 1, **caractérisée en ce que** :
Δ les polyorganosiloxanes **A** de formule générale (**I**) sont ceux pour lesquels :
• R₁ = X =CH₃,
• -R'-époxy est choisi parmi : 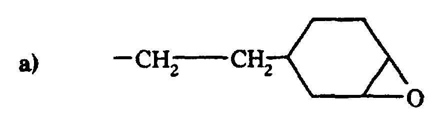 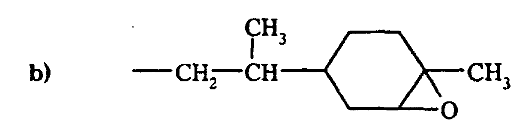 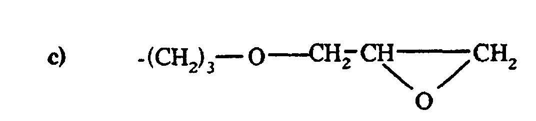 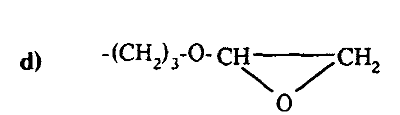
• x : est un nombre entier ou fractionnaire variant de 60 à 100,
• t : est un nombre entier ou fractionnaire variant de 6 à 9, et
• z : est un nombre entier ou fractionnaire variant de 0 à 2 ;
Δ les polyorganosiloxanes **B(a)** définis dans la revendication 1 sont ceux pour lesquels :
• x : est un nombre entier ou fractionnaire variant de 200 à 600,
• t : est un nombre entier ou fractionnaire variant de 1 à 5, et
• z : est un nombre entier ou fractionnaire variant de 0 à 2 ;
Δ les polyorganosiloxanes **B(b)** définis dans la revendication 1 sont ceux pour lesquels :
• x : est un nombre entier ou fractionnaire variant de 20 à 55,
• t : est un nombre entier ou fractionnaire variant de 10 à 16, et
• z : est un nombre entier ou fractionnaire variant de 0 à 2 ;
Δ les polyorganosiloxanes **B(c)** définis dans la revendication 1 sont ceux pour lesquels :
• R est un radical alkyle, linéaire ou ramifié, ayant de 10 à 20 atomes de carbone,
• x : est un nombre entier ou fractionnaire variant de 100 à 150,
• y : est un nombre entier ou fractionnaire variant de 15 à 75,
• t : est un nombre entier ou fractionnaire variant de 0 à 2, et
• z : est un nombre entier ou fractionnaire variant de 0 à 2.

3. Composition selon la revendication 1 ou 2, **caractérisée en ce que** la proportion minimale en deuxième polymère de type polyorganosiloxane **B,** tel que défini dans la revendication 1 ou la revendication 2, est de 0,5 % en poids du mélange **A** + **B,** encore mieux d'au moins 1 % en poids du mélange **A + B,** des proportions commercialement intéressantes variant généralement entre 1 % et 50 % en poids de deuxième polymère **B** relativement au mélange **A + B.**

4. Composition selon l'une quelconque des revendications 1 à 3, **caractérisée en ce qu'**elle comprend une combinaison du polymère de base **A** et du deuxième polymère **B(a),** pour diminuer les forces de pelage et augmenter le profil des forces de pelage parallèlement à la vitesse de pelage.

5. Composition selon l'une des revendications 1 à 3, **caractérisée en ce qu'**elle comprend une combinaison du polymère de base **A** et du deuxième polymère **B(b),** pour augmenter les forces de pelage, ainsi que pour diminuer les profils des forces de pelage parallèlement à la vitesse de pelage.

6. Composition selon l'une des revendications 1 à 5, **caractérisée en ce que** le deuxième polymère **B(c)** est présent, soit en combinaison avec le polymère **A**, soit en tant que troisième composant, avec le deuxième polymère **B** de formule **B(a)** ou de formule **B(b),** afin de rendre les forces de pelage indépendantes de la vitesse de pelage.

7. Composition selon l'une quelconque des revendications 1 à 6, **caractérisée en ce que** l'agent amorceur précité est un sel d'onium ou un complexe organométallique, de préférence un sel d'onium choisi parmi le groupe consistant d'un sel d'arylborateiodonium, des sels arylborateferrocenium, des sels de tétrafluoroantimonate(phosphate) iodonium, et des sels de tétrafluoroantimonate (phosphate)ferrocenium.

8. Utilisation d'une composition à base d'organopolysiloxanes époxy-fonctionnels réticulables tels que définis sous une quelconque des revendications précédentes, pour la fabrication d'éléments protécteurs de masses adhésives ("release liners"), papiers ou plastiques et des étiquettes autoadhésives en particulier sans "liner".

## Patentansprüche

1. Zusammensetzung auf der Basis von vernetzbarem, epoxy-funktionellem Organopolysiloxan, umfassend
A) mindestens 10 Gew.-% eines linearen Polyorganosiloxan (POS) A der mittleren allgemeinen Formel (I) 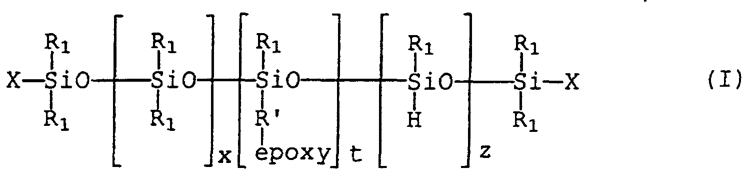 in der
• der Substituent R₁ gleich oder verschieden sein und einen linearen oder verzweigten Rest Alkyl mit 1 bis 4 Kohlenstoffatomen, gegebenenfalls substituiert durch ein oder mehrere Halogenatome, oder einen Rest Aryl, gegebenenfalls substituiert durch ein oder mehrere Halogenatome, darstellen kann,
• die die epoxy-funktionelle Gruppe tragende Kette R' gleich oder verschieden sein kann und 2 bis 50, vorzugsweise 2 bis 20 Kohlenstoffatome umfaßt, wobei diese epoxy-funktionelle Gruppe entweder als Abschluß der Kohlenwasserstoff-Kette vom Typ 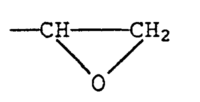 oder in einer Zwischenposition vom Typ 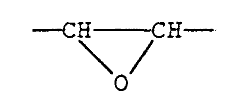 vorliegt,
und diese Zwischenposition der epoxy-funktionellen Gruppe an einem cyclischen Teil der Kette, insbesondere einem Ring mit 5 bis 7 Gliedern, liegen kann,
• X : ein monovalenter Rest ist, ausgewählt unter R₁, H, -R'-epoxy, Hydroxyl;
• x : eine ganze oder gebrochene Zahl von 40 bis 150 ist;
• t : eine ganze oder gebrochene Zahl von 3 bis 9 ist;
• z : eine ganze oder gebrochene Zahl von 0 bis 5 ist;
B) mindestens ein zweites vernetzbares, lineares, epoxy-funktionelles Polyorganosiloxan-Polymer B, vorliegend in einem Verhältnis, das 90 Gew.-% der Mischung A + B erreichen kann, gewählt aus der Gruppe, die gebildet wird durch:
a) ein vernetzbares, lineares, epoxy-funktionelles Polyorganosiloxan B(a) der vorstehenden allgemeinen Formel (I) mit den gleichen Definitionen, mit Ausnahme der Tatsache, daß
- x eine ganze oder gebrochene Zahl von 160 bis 1000 ist,
- t eine ganze oder gebrochene Zahl von 1 bis 15 ist, und
- z eine ganze oder gebrochene Zahl von 0 bis 5 ist,
b) ein vernetzbares, lineares, epoxy-funktionelles Polyorganosiloxan B(b) der vorstehenden allgemeinen Formel (I) mit den gleichen Definitionen, mit Ausnahme der Tatsache, daß
- x eine ganze oder gebrochene Zahl von 0 bis 120 ist,
- t eine ganze oder gebrochene Zahl von 10 bis 30 ist, und
- z eine ganze oder gebrochene Zahl von 0 bis 5 ist;
c) ein Polyorganosiloxan B(c) der folgenden allgemeinen Formel (II) 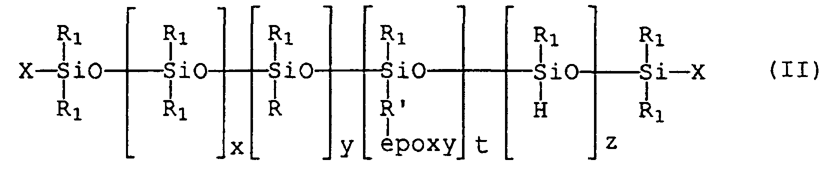 in der
• R₁, R' und X die gleichen Bedeutungen aufweisen wie bei den vorstehend genannten Polyorganosiloxanen (A) der Formel (I),
• die Kette R unter den linearen oder verzweigten Ketten Alkyl mit 9 bis 26 Kohlenstoffatomen ausgewählt wird;
- x eine ganze oder gebrochene Zahl von 0 bis 200 ist,
- y eine ganze oder gebrochene Zahl von 10 bis 90 ist,
- t eine ganze oder gebrochene Zahl von 0 bis 5 ist, und
- z eine ganze oder gebrochene Zahl von 0 bis 5 ist;
d) und ihre Mischungen;
(C) und mindestens eine Starterverbindung für das Aushärten unter Strahlung, vorzugsweise eine kationische Starterverbindung, insbesondere aktiviert unter Strahlung und vor allem durch photochemische Aktivierung, insbesondere UV-Strahlung.

2. Zusammensetzungen nach Anspruch 1, **dadurch gekennzeichnet, daß**
Δ die Polyorganosiloxane A der allgemeinen Formel (I) solche sind, in denen
• R₁ = X = CH₃ ist,
• -R'-epoxy ausgewählt wird unter: 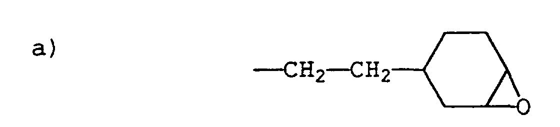 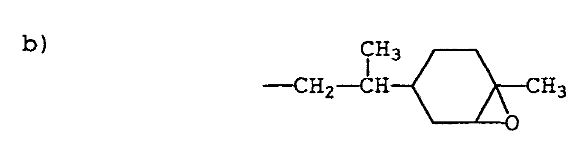 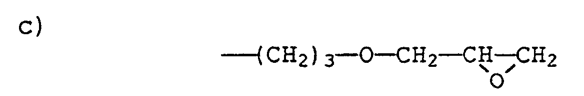 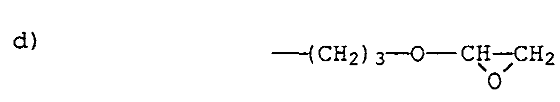
• x : eine ganze oder gebrochene Zahl von 60 bis 100 ist,
• t : eine ganze oder gebrochene Zahl von 6 bis 9 ist, und
• z : eine ganze oder gebrochene Zahl von 0 bis 2 ist;
Δ die in Anspruch 1 definierten Polyorganosiloxane B(a) solche sind, in denen
• x : eine ganze oder gebrochene Zahl von 200 bis 600 ist,
• t : eine ganze oder gebrochene Zahl von 1 bis 5 ist, und
• z : eine ganze oder gebrochene Zahl von 0 bis 2 ist;
Δ die in Anspruch 1 definierten Polyorganosiloxane B(b) solche sind, in denen
• x : eine ganze oder gebrochene Zahl von 20 bis 55 ist,
• t : eine ganze oder gebrochene Zahl von 10 bis 16 ist, und
• z : eine ganze oder gebrochene Zahl von 0 bis 2 ist;
Δ die in Anspruch 1 definierten Polyorganosiloxane B(c) solche sind, in denen
• R ein linearer oder verzweigter Rest Alkyl mit 10 bis 20 Kohlenstoffatomen ist,
• x : eine ganze oder gebrochene Zahl von 100 bis 150 ist,
• y : eine ganze oder gebrochene Zahl von 15 bis 75 ist,
• t : eine ganze oder gebrochene Zahl von 0 bis 2 ist, und
• z : eine ganze oder gebrochene Zahl von 0 bis 2 ist.

3. Zusammensetzung nach Anspruch 1 oder 2, **dadurch gekennzeichnet, daß** der minimale Anteil an dem zweiten Polymer vom Typ Polyorganosiloxan B, wie in Anspruch 1 oder in Anspruch 2 definiert, 0,5 Gew.-% der Mischung A + B, vorzugsweise mindestens 1 Gew.-% der Mischung A + B beträgt, wobei die kommerziell interessanten Anteile im allgemeinen zwischen 1 Gew.-% und 50 Gew.-% des zweiten Polymers B, bezogen auf die Mischung A + B, variieren.

4. Zusammensetzung nach irgendeinem der Ansprüche 1 bis 3, **dadurch gekennzeichnet, daß** sie eine Kombination von Polymer der Basis A und des zweiten Polymers B(a) umfaßt, um die Ablösekräfte zu verringern und das Profil der Ablösekräfte parallel zur Ablösegeschwindigkeit zu erhöhen.

5. Zusammensetzung nach irgendeinem der Ansprüche 1 bis 3, **dadurch gekennzeichnet, daß** sie eine Kombination von Polymer der Basis A und des zweiten Polymers B(b) umfaßt, um die Ablösekräfte zu erhöhen sowie die Profile der Ablösekräfte parallel zur Ablösegeschwindigkeit zu verringern.

6. Zusammensetzung nach irgendeinem der Ansprüche 1 bis 5, **dadurch gekennzeichnet, daß** das zweite Polymer B(c) entweder in Kombination mit dem Polymer A oder als dritter Bestandteil mit dem zweiten Polymer B der Formel B(a) oder der Formel B(b) anwesend ist, um die Ablösekräfte unabhängig von der Ablösegeschwindigkeit zu machen.

7. Zusammensetzung nach irgendeinem der Ansprüche 1 bis 6, **dadurch gekennzeichnet, daß** das vorstehend genannte Startermittel ein Oniumsalz oder ein Organometall-Komplex, vorzugsweise ein Oniumsalz ist, gewählt aus der durch ein Arylboratiodonium-Salz, die Arylboratferrocenium-Salze, die Tetrafluorantimonat(phosphat)-iodonium-Salze und die Tetrafluorantimonat(phosphat)-ferrocenium-Salze gebildeten Gruppe.

8. Verwendung einer Zusammensetzung auf der Basis von vernetzbaren, epoxy-funktionellen Organopolysiloxanen, wie in irgendeinem der vorstehenden Ansprüche definiert, für die Herstellung von Schutzelementen aus Haftmassen ("release liners"), Papieren oder Kunststoffen und selbstklebenden Etiketten, insbesondere ohne "liner".

## Claims

1. Crosslinkable epoxy-functional organopolysiloxane-based composition comprising
A) at least 10% by weight of a linear polyorganosiloxane (POS) A of average general formula 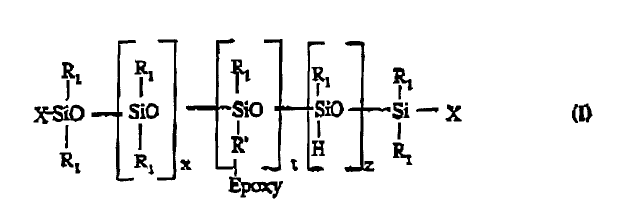 in which
the substituent R₁ may be identical or different and represent a linear or branched C₁-C₄ alkyl radical, optionally substituted by one or more halogen atoms, or an aryl radical, optionally substituted by one or more halogen atoms,
the chain R' bearing the epoxy-functional group may be identical or different and contains from 2 to 50, preferably from 2 to 20, carbon atoms, this epoxy-functional group being present either at the end of the hydrocarbon chain, in the form 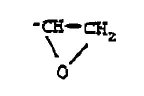 or in an intermediate position, in the form 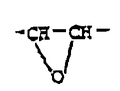 it being possible for this intermediate position of the epoxy-functional group to be present on a cyclic moiety of the chain, in particular a ring having from 5 to 7 members,
X is a monovalent radical selected from R₁, H, -R'-epoxy and hydroxyl,
x is an integral or fractional number varying from 40 to 150,
t is an integral or fractional number varying from 3 to 9,
z is an integral or fractional number varying from 0 to 5;
B) at least one second crosslinkable epoxy-functional linear polyorganosiloxane polymer B, present in a proportion of up to 90% by weight of the mixture A + B and selected from the group consisting of
a) a crosslinkable epoxy-functional linear polyorganosiloxane B(a) of general formula (I) above with the same definitions except that
x is an integral or fractional number varying from 160 to 1000,
t is an integral or fractional number varying from 1 to 15, and
z is an integral or fractional number varying from 0 to 5;
b) a crosslinkable epoxy-functional linear polyorganosiloxane B(b) of the formula (I) above, having the same definitions except that
x is an integral or fractional number varying from 0 to 120,
t is an integral or fractional number varying from 10 to 30,
z is an integral or fractional number varying from 0 to 5;
c) a polyorganosiloxane B(c) of general formula (II) 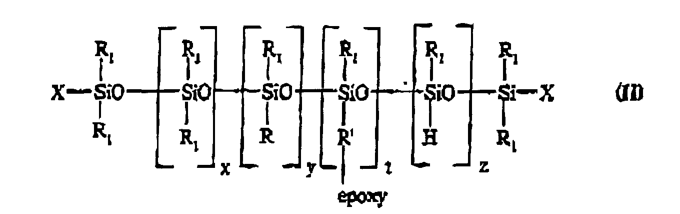 in which
R₁, R' and X are as defined for the above polyorganosiloxanes A of formula (I),
the chain R is selected from linear or branched alkyl chains containing from 9 to 26 carbon atoms,
x is an integral or fractional number varying from 0 to 200,
y is an integral or fractional number varying from 10 to 90,
t is an integral or fractional number varying from 0 to 5, and
z is an integral or fractional number varying from 0 to 5;
d) and mixtures thereof;
C) and at least one radiation curing initiator, preferably a cationic initiator, which in particular is activated by radiation and especially by photochemical activation, UV activation in particular.

2. Composition according to claim 1, **characterized in that**
the polyorganosiloxanes A of general formula (I) are such that
R₁ = X = CH₃,
-R'-epoxy is selected from 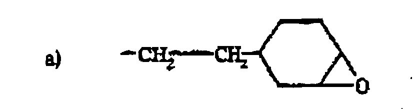 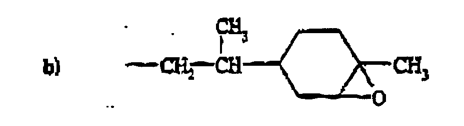 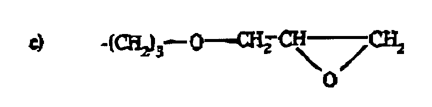 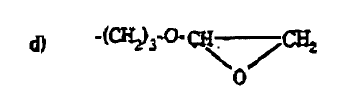 x is an integral or fractional number varying from 60 to 100,
t is an integral or fractional number varying from 6 to 9, and
z is an integral or fractional number varying from 0 to 2;
the polyorganosiloxanes B(a) defined in claim 1 are such that
x is an integral or fractional number varying from 200 to 600,
t is an integral or fractional number varying from 1 to 5, and
z is an integral or fractional number varying from 0 to 2;
the polyorganosiloxanes B(b) defined in claim 1 are such that
x is an integral or fractional number varying from 20 to 55,
t is an integral or fractional number varying from 10 to 16, and
z is an integral or fractional number varying from 0 to 2;
the polyorganosiloxanes B(c) defined in claim 1 are such that
R is a linear or branched alkyl radical having from 10 to 20 carbon atoms,
x is an integral or fractional number varying from 100 to 150,
y is an integral or fractional number varying from 15 to 75,
t is an integral or fractional number varying from 0 to 2, and
z is an integral or fractional number varying from 0 to 2.

3. Composition according to claim 1 or 2,
**characterized in that** the minimum proportion of the second polyorganosiloxane-type polymer B as defined in claim 1 or claim 2 is 0.5% by weight of the mixture A + B, more preferably at least 1% by weight of the mixture A + B, proportions of commercial interest varying generally between 1% and 50% by weight of the second polymer B relative to the mixture A + B.

4. Composition according to any one of claims 1 to 3, **characterized in that** it comprises a combination of the base polymer A and of the second polymer B(a) in order to decrease the peel forces and increase the profile of the peel forces parallel to the peel rate.

5. Composition according to one of claims 1 to 3, **characterized in that** it comprises a combination of the base polymer A and of the second polymer B(b) in order to increase the peel forces and also in order to decrease the profiles of the peel forces parallel to the peel rate.

6. Composition according to one of claims 1 to 5, **characterized in that** the second polymer B(c) is present either in combination with the polymer A or as third component, with the second polymer B of formula B(a) or of formula B(b), in order to make the peel forces independent of the rate of peeling.

7. Composition according to any one of claims 1 to 6, **characterized in that** the abovementioned initiator agent is an onium salt or an organometallic complex, preferably an onium salt chosen from the group comprising an iodonium arylborate salt, ferrocenium arylborate salts, iodonium tetrafluoroantimonate (phosphate) salts and ferrocenium tetrafluoroantimonate (phosphate) salts.

8. Use of a composition based on crosslinkable epoxy-functional organopolysiloxanes as defined in any one of the preceding claims for the manufacture of protective components for adhesive bodies ("release liners"), papers or platics and of self-adhesive labels, in particular without "liner".
